# EUROPEAN PATENT APPLICATION

(11) **EP 3 009 228 A1**
(43) Date of publication of application: **20.04.2016**
(21) Application number: 14382408.4
(22) Date of filing: 17.10.2014
(51) Int. Cl.: B23Q 11/00

(54) **Machine tool with sliding counterbalancing system on a carriage exterior to the machine**

(71) Applicant: Bostek Innovation S.L.U., 20159 Asteasu (Gipuzkoa) (ES)
(72) Inventor: Dravasa Gurruchaga, Juan José, 20159 Asteasu-Gipuzkoa (ES); Bengoechea Ubarrechena, Elixabete, 20159 Asteasu-Gipuzkoa (ES)
(74) Representative: Stiebe, Lars Magnus

(57) **Abstract**

Machine tool that comprises a vertical column (1) displaceable in a horizontal direction according to a first (X) horizontal axis, with respect to a support (2) anchored to the ground, a horizontal beam (3) mounted on said column (1) and displaceable vertically according to a (Y) vertical axis, a tool holder head (4) mounted on said horizontal beam (3) and displaceable with respect to said horizontal beam (3) according to a second (Z) horizontal axis perpendicular to said first (X) horizontal axis, and counterbalancing means (5) of the position of the head that comprise at least one cable (6, 7) connected to the horizontal beam (3). The counterbalancing means (5) are mounted in a displaceable manner on outer guiding means (8') such that the counterbalancing means (5) can displace according to a direction substantially parallel to the first (x) horizontal axis.

## Description

### TECHNICAL FIELD

The invention is encompassed within the field of machine tools, and more specifically, it relates to single column lathes with counterbalancing system of the weight of the horizontal beam.

### BACKGROUND OF THE INVENTION

A single column lathe comprises a vertical column and a horizontal beam that can be displaced vertically with respect to the vertical column in order to adjust its vertical position (according to a Z axis) with respect to a rotating plate on which the workpiece to be machined is positioned. A carriage holding a tool holder head is mounted on the horizontal beam. The carriage can slide longitudinally with respect to the beam to adjust the position of the tool (according to a Y axis) with respect to the workpiece to be machined. In order for the machine to work on large pieces, the horizontal beam is very long and is mounted on the vertical column by one of its ends such that the rest of the horizontal beam is a cantilever.

A problem of this type of lathes is that the head, carriage and horizontal beam (support crossbeam) assembly is very heavy. This assembly requires a degree of freedom in the vertical direction. The management of these large weights in the vertical direction against and in favor of gravity brings about difficulties that have to do with the dynamism of the assembly and the safety of use thereof.

Counterbalancing systems are usually used in order to solve this problem, for example by means of suspended weights tied with a cable to the horizontal beam to pull upwards from the same and counterbalance its weight, such that the actuation of the carriage is carried out as if the carriage and the head had an equivalent weight equal to zero.

Sometimes, instead of suspended weights, bracing systems with cables or braces are used, which are tied to the horizontal beam by one end and to the fixed base of the vertical column or to the vertical column itself by the other. Usually there are hydraulic systems arranged at the end tied to the column that can regulate the counterbalancing force applied to the carriage.

These systems exhibit the inconvenience that every counterbalancing force is transferred to the base of the vertical column or to the vertical column itself, which may even be lifted or deformed, due to which these systems cannot guarantee the position of the tool with the precision required. Counterbalancing systems are described, for example, in: Gb2033796-A, US 3,656,860, US 3,264,905, US 3,097,568, US 3,896,938, GB 938.947.

In addition, it is usual for the vertical column to displace horizontally (according to an X direction) on guides arranged on a bench or support fixed to the ground in order for the tool to have the possibility of regulating its position according to three orthogonal axes. In this case, the force transmitted by the counterbalancing system can affect the guides as well, making the displacement of the vertical column difficult.

### DESCRIPTION OF THE INVENTION

The present invention relates to a vertical lathe that comprises a vertical column displaceable in the horizontal direction according to a first X horizontal axis, with respect to a support anchored to the ground, a horizontal beam mounted on said vertical column displaceable vertically according to a Y vertical axis, a tool holder head mounted (through a carriage) on said horizontal beam displaceable (for example, through a carriage) with respect to said horizontal beam according to a second Z horizontal axis perpendicular to said first X horizontal axis and counterbalancing means of the weight of the horizontal beam and the head (and the carriage) that comprise at least one cable connected to the horizontal beam. Said counterbalancing means can pull from the cable with more or less force in order to counterbalance deviations in the position of the horizontal beam, fundamentally caused by the weight of the tool holder head.

The machine object of the invention comprises counterbalancing means mounted on auxiliary elements, separated from the support of the vertical column. The auxiliary elements comprising guiding means such that the counterbalancing means can displace according to a direction substantially parallel to the first X horizontal axis. Thus, the counterbalancing means are mounted independently from the vertical column and its anchoring support to the ground. In consequence, the force exerted by the counterbalancing system is transferred to the aforementioned auxiliary elements instead of to the vertical column itself. The displacement of the counterbalancing means (through the guiding means) will take place preferably in a simultaneous manner with the displacement of the vertical column according to the first X horizontal axis.

Thus, the counterbalancing force is not transmitted to the machine.

The counterbalancing means can comprise a first cable connected at a first connection point of the horizontal beam and a second cable connected at a second connection point of the horizontal beam, the first connection point being farther away from the vertical column than the second connection point. Thus, the counterbalancing means pull the horizontal beam from two points located at different distances in the beam.

The counterbalancing means can comprise a tensioner device in the first connection point that can vary the position of the cable with respect to the first connection point. In this embodiment, the cable, instead of being tied directly to the beam, is tied to the tensioner device which is in turn tied to the beam, such that for the same traction of the cable, the counterbalancing force applied to the beam can vary by means of a greater or smaller performance of the tensioner device. In one embodiment, the tensioner device is a hydraulic actuator, for example a hydraulic cylinder, which comprises a piston joined to the first cable and a body tied to the horizontal beam in the aforementioned first connection point.

In one embodiment, the first cable and the second cable are joined to the counterbalancing means to tension the cables simultaneously. The traction force exerted by the first and second cable is similar to the weight of the beam, which remains as if hanged with zero weight. The tensioner device exerts an additional force that straightens the position of the beam.

The first and second cable can be joined to the counterbalancing means in an articulated manner through an auxiliary carriage that can slide with respect to vertical guides. In one embodiment, the aforementioned vertical guides are mounted on a structure tied to the vertical column in order to avoid transversal displacements of the cables.

The counterbalancing means can be joined articulately to an outer carriage that can slide over the guiding means in a horizontal direction parallel to the X axis.

The counterbalancing means can comprise an actuating hydraulic cylinder.

### BRIEF DESCRIPTION OF THE DRAWINGS

In order to supplement the description and with the purpose of facilitating a better comprehension of the invention according to a practical embodiment thereof, a set of figures is attached as an integral part of the description representing the following in an illustrative rather than limiting manner:
Figure 1 is a perspective of a lathe according to the object of the invention.

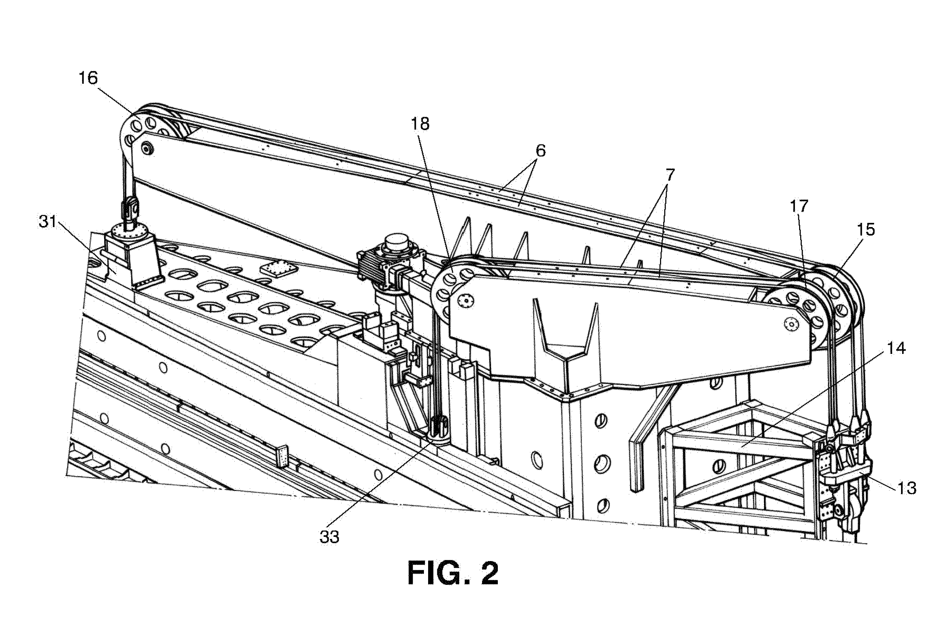

Figure 2 is an enlarged detail in perspective of the cables of the counterbalancing system and the tying thereof to the horizontal beam.

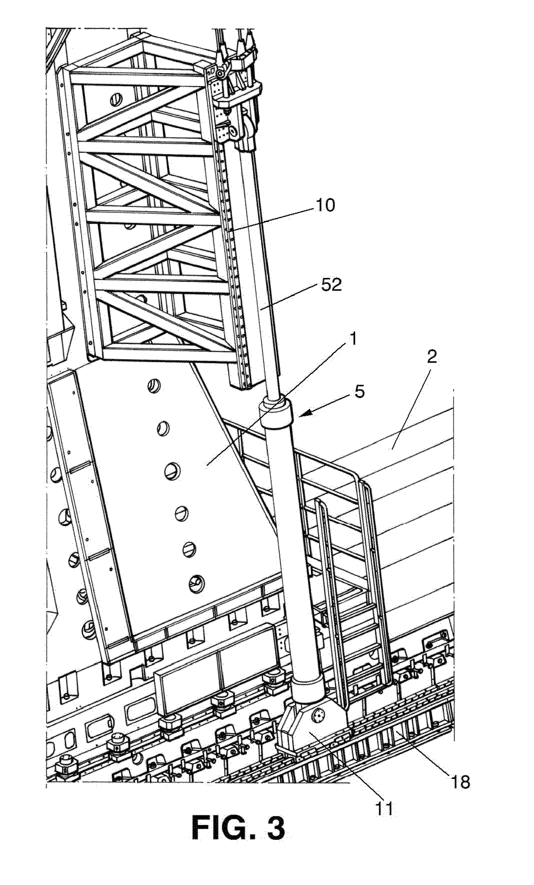

Figure 3 is an enlarged detail in perspective of a tying actuator to the first connection point.

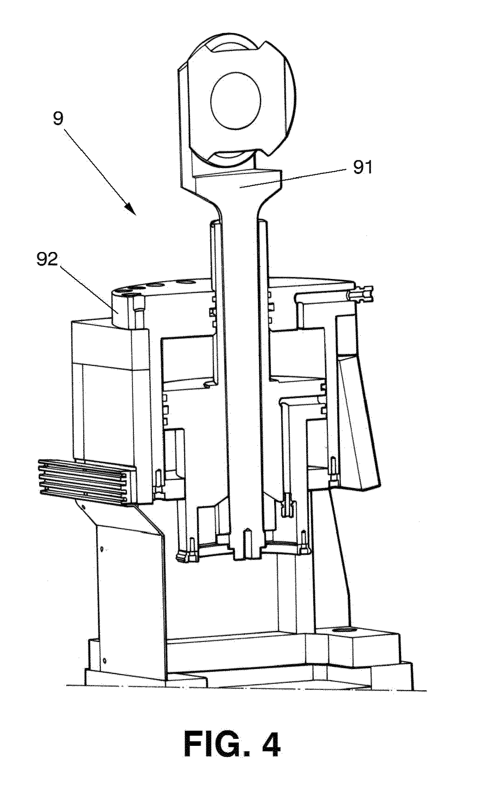

Figure 4 is an enlarged detail in perspective of an embodiment wherein the counterbalancing means comprise a hydraulic cylinder.

### DESCRIPTION OF AN EMBODIMENT OF THE INVENTION

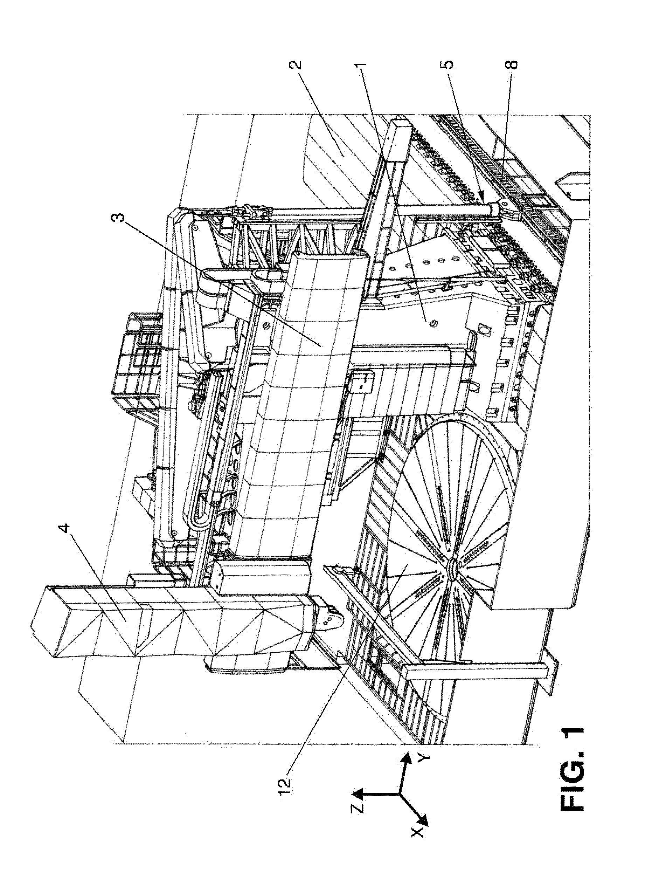

As shown in figure 1, the vertical lathe comprises a vertical column (1) that can be displaced on a horizontal support (2) anchored to the ground by means of guides (21) according to a first X horizontal axis. A horizontal beam (3) is mounted in a sliding manner on the vertical column (1), which can be displaced vertically (up/down) with respect to the vertical column (1) according to a Z vertical axis. A tool holder head (4) is mounted on the vertical beam (1) through a carriage (41) displaceable longitudinally on the horizontal beam (3) according to a second Y horizontal axis. The tool holder head holds a machining tool. Figure 1 also shows a rotating plate (12) to which the workpiece to be machined is tied.

In the preferred embodiment represented in the figures, the lathe comprises a counterbalancing device that comprises a hydraulic cylinder (5) which body (51) is articulately joined to an outer carriage (11) that can be displaced on the outer guide (8') according to the direction of the first X horizontal axis, simultaneously with the movement of the vertical column (1). The piston rod (51) of the hydraulic cylinder (5) is articulately joined to an auxiliary carriage (13) to which the first cable (6) and the second cable (7) are tied, such that the cylinder pulls both cables (6, 7) with the same force. The auxiliary carriage (13) displaces vertically on vertical guides (10) mounted on a structure (14) tied to the vertical column (1) to avoid lateral displacements of the cables (6, 7).

The counterbalancing device comprises a first cable (6) that is tied to the auxiliary carriage (13), passes through a pair of pulleys (15, 16) and is tied by its other end to a first connection point (31) of the longitudinal beam (3). A second cable (7) is tied to the horizontal beam (3) at a second connection point (32), in a position closer to the vertical column (1) than the cable (6), passes through two pulleys (17, 18) and is tied to the same auxiliary carriage (13).

The two cables (6, 7) counterbalance the weight of the horizontal beam (3), such that it can slide vertically with respect to the vertical column (1) as if its weight were zero.

Instead of being tied to the horizontal beam (3) directly, the cable (6) is tied to the piston rod (91) of a hydraulic cylinder (9) acting as tensioner device to counterbalance the deviations in the position of the horizontal beam (3). The body (92) of the hydraulic cylinder (9) is tied to the horizontal beam (3) at the first connection point (31). The cylinder (9) can be actuated independently in order to counterbalance the bending of the horizontal beam (3), that is to say, depending on the position of the piston rod (91) of the hydraulic cylinder (9), the cable (6) lifts the horizontal beam (3) more or less, or in other words, the cable (6) always pulls with the same force, but the tying point of the cable can be located at different heights with respect to the theoretical horizontal line of the carriage, thereby achieving different degrees of counterbalancing of the position of the horizontal beam (3) as required.

In this text, the word "comprises" and its variants (such as "comprising", etc.) such not be interpreted in an excluding manner, that is to say, they do not exclude the possibility that what is described includes other elements, steps, etc.

On the other hand, the invention is not limited to the specific embodiments described herein, but also covers, for example, the variants that could be designed by an average expert in the art (for example, in terms of the selection of materials, dimensions, components, configuration, etc.) within what is deduced from the claims.

## Claims

1. Machine tool that comprises a vertical column (1) displaceable in a horizontal direction according to a first (X) horizontal axis, with respect to a support (2) anchored to the ground, a horizontal beam (3) mounted on said column (1) displaceable vertically according to a (Z) vertical axis, a tool holder head (4) mounted on said horizontal beam (3) displaceable with respect to said horizontal beam (3) according to a second (Y) horizontal axis perpendicular to said first (X) horizontal axis, and counterbalancing means (5) of the weight of the horizontal beam (3) and of the tool holder head (4) that comprise at least one cable (6, 7) connected to the horizontal beam (3), **characterized in that** the counterbalancing means (5) are mounted on auxiliary elements (8) separated from the support (2), the auxiliary elements (8) comprising guiding means (8') configured such that the counterbalancing means (5) can displace according to a direction substantially parallel to the first (x) horizontal axis.

2. Machine tool according to claim 1, wherein said counterbalancing means comprise a first cable (5) connected at a first connection point (31) of the horizontal beam (3) and a second cable (6) connected at a second connection point (32) of the horizontal beam (3), the first connection point (31) being farther away from the vertical column than the second connection point (32).

3. Machine tool according to any one of the preceding claims, which comprises a tensioner device (9) at the first connection point (31) that can vary the position of the cable with respect to the first connection point (31).

4. Machine tool according to claim 3, wherein the tensioner device (9) is a hydraulic cylinder that comprises a piston (91) joined to the first cable (5) and a body (92) tied to the horizontal beam (3) at the aforementioned first connection point (31).

5. Machine tool according to any one of the claims 2 or 4, wherein the first cable (5) and the second cable (6) are joined to the counterbalancing means (5) to tension the cables simultaneously.

6. Machine tool according to claim 5, wherein the first and second cables are joined to the counterbalancing means (5) in an articulated manner by means of an auxiliary carriage (13) that can slide with respect to vertical guides (10).

7. Machine tool according to claim 6, wherein the aforementioned vertical guides (10) are mounted on a structure (14) tied to the vertical column (1).

8. Machine tool according to any one of the preceding claims, wherein the counterbalancing means (5) are articulately joined to an outer carriage (11) that can slide on the guiding means (8) in a horizontal direction parallel to the X axis.

9. Machine tool according to any one of the preceding claims, wherein said counterbalancing means (5) comprise an actuating hydraulic cylinder.
